# EUROPÄISCHE PATENTANMELDUNG

(11) **EP 0 921 343 A2**
(43) Veröffentlichungstag der Anmeldung: **09.06.1999**
(21) Anmeldenummer: 98119091.1
(22) Anmeldetag: 09.10.1998
(51) Int. Cl.: F16L 23/18, F16J 15/10

(54) **Dichtungsring**

(30) Priorität: 04.12.1997 CH 279797
(71) Anmelder: Georg Fischer Rohrleitungssysteme AG, CH-8201 Schaffhausen (CH)
(72) Erfinder: Lemon, Barry, 8234 Stetten (CH)
(74) Vertreter: Rottmann, Maximilian R.

(57) **Zusammenfassung**

Dichtungsring, insbesondere für die Herstellung einer Flanschverbindung von Rohrteilen, wobei der Dichtungsring mit einer Mehrzahl von Ausnehmungen (A, B, C) für unterschiedliche Lochbild-Normungen versehen ist.

## Beschreibung

Die vorliegende Erfindung betrifft einen Dichtungsring nach dem Oberbegriff des Anspruchs 1.

Bei der Verlegung von Rohrleitungen sind zwischen den einzelnen Rohrleitungsabschnitten Uebergangsverbindungen notwendig. Diese Uebergangsverbindungen weisen in der Regel Formstücke auf, die beispielsweise mit einem Flanschadapter versehen sind. Die Flanschflächen von zwei miteinander zu verbindenden Flanschadaptern, werden unter Zwischenschaltung eines Dichtungsringes miteinander in Anlage gebracht.

Der Dichtungsring muss in der Regel so ausgebildet sein, dass er den Flanschflächenquerschnitt gut abdeckt, d.h. möglichst vom Innendurchmesser bis zum Aussendurchmesser des Flansches reicht. Damit sollte eine fluiddichte Verbindung von zwei aneinanderliegenden Flanschen mit zwischengeordneter Dichtung gewährleistet sein. Zum Verbinden der Rohrleitungen sind Flanschringe vorgesehen, welche über den Flanschadapter geschoben und miteinander verschraubt werden. Dadurch kann der für eine fluiddichte Verbindung erforderliche Anpressdruck auf die zwischen den Flanschscheiben liegende Dichtung aufgebracht werden. Bei der Montage kann es leicht vorkommen, dass der Dichtungsring verrutscht und als Folge den Flanschringquerschnitt nicht mehr genügend abdeckt. Das führt zu unterschiedlichen Flächenpressdrücken im Flanschringbereich des Flanschadapters, was wiederum zur Leckage führen kann.

Aus der US 34 80 301 ist ein selbstzentrierender Schablonenring bekannt, welcher dazu dient, einen spiralförmig ausgebildeten Dichtungsring zwischen zwei Rohrflanschen zu zentrieren. Der Dichtungsring ist dabei innerhalb des Schablonenrings angeordnet. Der Schablonenring selber ist mit acht konkaven Ausnehmungen versehen, in welchen die Befestigungsschrauben aufgenommen werden können. Der Schablonenring ist so ausgelegt, dass gewisse Dimensionsunterschiede der Flansche und der Schrauben aufgenommen werden können. Zum Positionieren des Schablonenrings weist dieser am äusseren Umfang zwei Laschen auf. Abgesehen davon, dass zur Positionierung des Dichtrings ein separater Schablonenring eingesetzt werden muss, eignet sich der Schablonenring nur beschränkt für unterschiedliche Lochbild-Normungen.

Ausgehend vom erläuterten Stand der Technik stellt sich die vorliegende Erfindung die Aufgabe, einen Dichtungsring vorzuschlagen, der universell einsetzbar ist.

Diese Aufgabe wird durch den kennzeichnenden Teil des Anspruches 1 gelöst. Weitere vorteilhafte Ausgestaltungen gehen aus den abhängigen Ansprüchen hervor.

So wird in einem bevorzugten Ausführungsbeispiel vorgeschlagen, den Dichtungsring aus zwei im wesentlichen kreisringförmig gestalteten Ringelementen zu fertigen, wobei das innere Ringelement bezüglich des abzudichtenden Mediums chemisch beständig sein soll. Ein derartiger Dichtungsring lässt sich sehr universell einsetzen, da die beiden Ringelemente aus unterschiedlichen Materialien gefertigt und optimal an ihre Aufgabe angepasst werden können.

In einem weiteren, bevorzugten Ausführungsbeispiel wird vorgeschlagen, das äussere Ringelement aus einem elastischen Werkstoff, vorzugsweise aus einem Elastomer und das innere Ringelement vorzugsweise aus einem Fluorcarbon zu fertigen. Ein aus Fluorcarbon gefertigtes inneres Ringelement hat den Vorteil, dass es eine glatte Oberfläche besitzt und der Innendurchmesser innerhalb enger Toleranzen gefertigt werden kann.

Anhand der beiliegenden Zeichnung wird ein bevorzugtes Ausführungsbeispiel der Erfindung näher erläutert. In dieser Zeichnung zeigt:
Figur 1 eine Draufsicht auf den Dichtungsring;
Figur 2 einen Querschnitt durch den Dichtungsring, und
Figur 3 einen vergrösserten Ausschnitt der Fig. 2.

Der hier zur Rede stehende Dichtungsring ist zur Anordnung zwischen zwei mit Flanschelementen versehenen Rohren vorgesehen. Zum Verbinden der Rohre sind Flanschringe vorgesehen, welche über den Flanschadapter geschoben und mittels Schrauben miteinander verbunden werden. Da derartige Rohre wie auch die Flanschelemente und Flanschringe hinreichend bekannt sind, wurde auf deren Darstellung verzichtet.

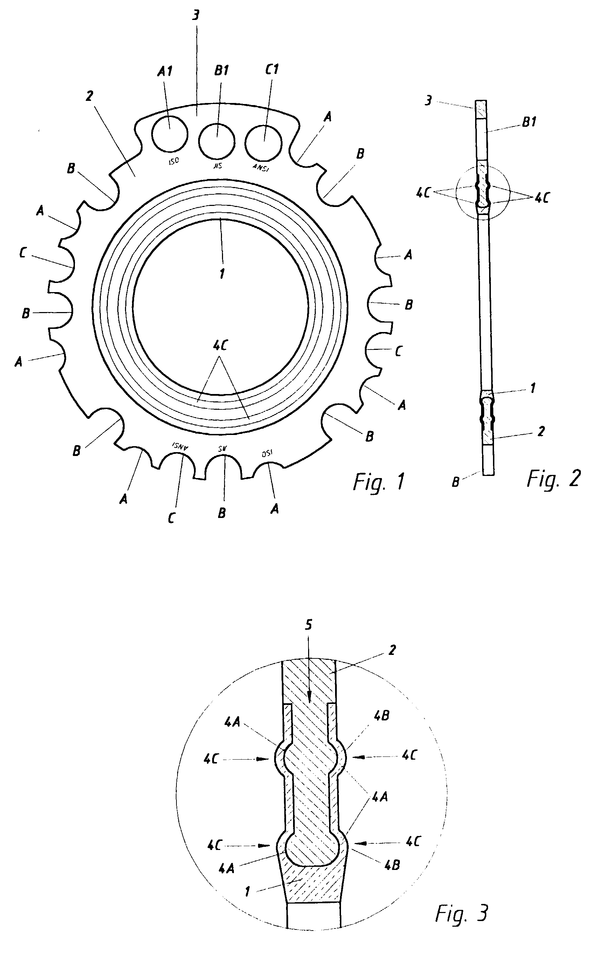

Der nicht massstabsgetreu wiedergegebene Dichtungsring besteht aus zwei im wesentlichen kreisringförmig gestalteten Ringelementen 1, 2. Das innere Ringelement 1 weist entlang des äusseren Umfangs einen Schlitz auf, in dem das äussere Ringelement 2 teilweise aufgenommen ist. Das äussere Ringelement 2 ist vorzugsweise aus einem Elastomer gefertigt währenddem das innere Ringelement 1 vorzugsweise aus einem Fluorcarbon wie beispielsweise PTFE (Polytetrafluorethylen) gefertigt ist. Jedenfalls soll das innere Ringelement 1 bezüglich des abzudichtenden Mediums chemisch beständig sein. Um eine sichere und dichte Verbindung zwischen den beiden Ringelementen 1, 2 zu erreichen, weist das äussere Ringelement 2 zwei kreisringförmig verlaufende Verdickungen 4A auf, welche in korrespondierenden Aussparungen 4B des inneren Ringelements 1 aufgenommen sind (Fig. 3).

Um ein und denselben Dichtungsring für Rohrverbindungen mit unterschiedlichen Verbindungsschraubenanordnungen einsetzen zu können, ist das äussere Ringelement 2 im Umfangsbereich mit einer Mehrzahl von Ausnehmungen A, B, C für unterschiedliche Lochbild-Normungen versehen. Diese Ausnehmungen A, B, C sind dazu bestimmt, die Verbindungsschrauben einer Flanschanschlussanordnung mindestens teilweise formschlüssig zu umfassen. Der vorliegende Dichtungsring weist insgesamt zwanzig Ausnehmungen für drei unterschiedliche Lochbild-Normungen auf. Die Anzahl der Ausnehmungen ist abhängig von der Dimension des Dichtungsrings. So sind acht Ausnehmungen mit dem Bezugszeichen A für ein Lochbild gemäss der ISO-Norm versehen. Mit B sind acht Ausnehmungen für ein Lochbild nach japanischer Norm bezeichnet (JIS) bezeichnet. Schliesslich sind vier Ausnehmungen mit dem Bezugszeichen C für ein Lochbild nach amerikanischer Norm (ANSI) versehen. Die für die jeweilige Lochbild-Normung vorgesehenen Ausnehmungen A, B, C sind symmetrisch angeordnet, so dass der Dichtungsring in beliebiger Rotationslage fixierbar ist.

Im äusseren Umfangsbereich weist der Dichtungsring eine Zunge 3 auf, in welche für jede unterschiedliche Normung je eine Bohrung A1, B1, C1 eingelassen ist. Diese Zunge 3 hat den Vorteil, dass sie die Handhabung des Dichtungsrings vereinfacht. Ausserdem kann der Dichtungsring durch das Einführen einer Schraube in die entsprechende Bohrung A1, B1, C1 in der Zunge 3 in seiner Position fixiert werden. Um eine Zuordnung der Ausnehmungen A, B, C zu der entsprechenden Lochbild-Normung zu vereinfachen, ist je eine Bohrung A1, B1, C1 sowie eine Ausnehmung A, B, C pro Lochbild-Normung beschriftet.

Anhand der Fig. 3, welche einen vergrösserten Ausschnitt der Fig. 2 zeigt, ist die Verbindung zwischen dem inneren und dem äusseren Ringelement 1, 2 ersichtlich. Aus dieser Darstellung gehen insbesondere die zwei Verdickungen 4A des äusseren Ringelements 2 hervor, welche in den korrespondierenden Aussparungen 4B im Schlitz 5 des inneren Ringelements 1 aufgenommen sind. Die Verdickungen 4A des äusseren Ringelements 2 setzen sich beim inneren Ringelement 1 beidseitig fort, so dass letzteres mit zwei kreisringförmig verlaufenden Erhebungen 4C versehen ist.

Diese Erhebungen 4C bewirken lokal eine hohe Flächenpressung, so dass eine gute Dichtwirkung des an und für sich relativ unelastischen Materials (PTFE) des inneren Ringelements 1 begünstigt wird.

Mit dem beschriebenen Dichtungsring werden vielseitige Anwendungsmöglichkeiten auf einfachste Weise abgedeckt.

Zum einen kann ein derartig ausgestalteter Dichtungsring einfach, schnell und sicher zwischen Flanschelementen mit unterschiedlichen Lochbildnormen angeordnet werden. Zum anderen wird der Dichtring durch die zweiteilige Ausbildung verschiedensten Dichtungsaufgaben gerecht, da die beiden Ringelemente aus unterschiedlichen Materialien gefertigt und daher optimal an ihre Aufgabe angepasst werden können. Indem das innere Ringelement aus einem -bezüglich des abzudichtenden Mediums- chemisch beständigen Werkstoff gefertigt ist, hat der Dichtungsring den weiteren Vorteil, dass keine Kontamination des durch die Rohre strömenden Fluids stattfindet und dass der Dichtungsring vom durchströmenden Fluid nicht angegriffen wird. Ein weiterer Vorteil besteht darin, dass durch die glatte Oberfläche des inneren Ringelements und dessen enge Toleranz in bezug auf den Innendurchmesser eine weitgehend totraumfreie Verbindung von zwei Rohren gewährleistet wird, indem sich die Innenseite der Rohre eng an die Innenseite des Dichtrings anschliesst. Dadurch können kaum Bakterien heranwachsen, was von entscheidender Bedeutung für sogenannte 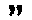 High-Purity" Anwendungen ist.

Es versteht sich, dass nebst den hier gezeigten Ausnehmungen für drei unterschiedliche Lochbildnormen beispielsweise auch Ausnehmungen für zwei oder vier Lochbildnormen vorgesehen werden können.

## Patentansprüche

1. Dichtungsring zur Anordnung zwischen zwei mit Flanschelementen versehenen Rohren, welche Flanschelemente mittels Schrauben miteinander verbindbar sind, wobei der Dichtungsring im äusseren Umfangsbereich Ausnehmungen zur formschlüssigen Anlage an den Schrauben aufweist, **dadurch gekennzeichnet,** dass der Dichtungsring mit einer Mehrzahl von Ausnehmungen (A, B, C; A1, B1, C1) für unterschiedliche Lochbild-Normungen versehen ist.

2. Dichtungsring nach Anspruch 1, dadurch gekennzeichnet, dass die Mehrzahl der Ausnehmungen (A, B, C; A1, B1, C1) im äusseren Umfangsbereich des Dichtungsrings angeordnet sind.

3. Dichtungsring nach Anspruch 1 oder 2, dadurch gekennzeichnet, dass der Dichtungsring im äusseren Umfangsbereich eine Zunge (3) aufweist, in welche für jede unterschiedliche Normung je eine Bohrung (A1, B1, C1) eingelassen ist.

4. Dichtungsring nach einem der vorhergehenden Ansprüche, dadurch gekennzeichnet, dass eine Mehrzahl der Ausnehmungen (A, B, C) zumindest annähernd halbkreisförmig ausgebildet ist.

5. Dichtungsring nach einem der vorhergehenden Ansprüche, dadurch gekennzeichnet, dass die für die jeweilige Lochbild-Normung vorgesehenen Ausnehmungen (A, B, C; A1, B1, C1) symmetrisch angeordnet sind, so dass der Dichtungsring in beliebiger Rotationslage fixierbar ist.

6. Dichtungsring nach einem der vorhergehenden Ansprüche, dadurch gekennzeichnet, dass zumindest je eine Ausnehmung (A, B, C; A1, B1, C1) pro Lochbild beschriftet ist.

7. Dichtungsring nach einem der vorhergehenden Ansprüche, dadurch gekennzeichnet, dass der Dichtungsring aus zwei im wesentlichen kreisringförmig gestalteten Ringelementen (1, 2) besteht, wobei das innere Ringelement (1) bezüglich des abzudichtenden Mediums chemisch beständig ist.

8. Dichtungsring nach Anspruch 7, dadurch gekennzeichnet, dass das innere Ringelement (1) entlang des äusseren Umfangs einen Schlitz (5) aufweist, in dem das äussere Ringelement (2) teilweise aufgenommen ist.

9. Dichtungsring nach Anspruch 7 oder 8, dadurch gekennzeichnet, dass das äussere Ringelement (2) aus einem elastischen Werkstoff, vorzugsweise aus einem Elastomer und das innere Ringelement (1) vorzugsweise aus einem Fluorcarbon gefertigt ist.

10. Dichtungsring nach einem der Ansprüche 7 bis 9, dadurch gekennzeichnet, dass das äussere Ringelement (2) zumindest eine kreisringförmige Verdickung (4A) aufweist, und dass das innere Ringelement (1) eine mit der/den kreisringförmigen Verdickung(en) (4A) des äusseren Ringelements (2) korrespondierende Gestaltung aufweist.

11. Dichtungsring nach einem der Ansprüche 7 bis 10, dadurch gekennzeichnet, dass das innere Ringelement (1) beidseitig mit zumindest einer kreisringförmig verlaufenden Erhebung (4C) versehen ist.
